# EUROPEAN PATENT APPLICATION

(11) **EP 2 977 644 A2**
(43) Date of publication of application: **27.01.2016**
(21) Application number: 14193049.5
(22) Date of filing: 13.11.2014
(51) Int. Cl.: F16F 15/26

(54) **SINGLE CYLINDER BALANCE SYSTEM**

(30) Priority: 18.07.2014 US 201414335301
(71) Applicant: Kohler Co., Kohler, Wisconsin 53044 (US)
(72) Inventor: Sajdowitz, Scott C., Sheboygan Falls, WI 53085 (US); Thorn, Christopher D., Belgium, WI 53004 (US); Bykowski, Jonathan T., Shorewood, WI 53211 (US); Leroy, Tyler W., Plymouth, WI 53073 (US); Albert, Roger W., Plymouth, WI 53073 (US)
(74) Representative: Hoefer & Partner Patentanwälte mbB

(57) **Abstract**

A balance system for a single cylinder engine (10) is described. The single cylinder engine (10) generates forces, that if left unbalanced, cause significant vibrations or movement to the single cylinder engine (10) and devices driven by the single cylinder engine (10). The balance shaft includes a primary balance shaft (21) for a first type of forces and at least one secondary balance shaft (23) for a second type of forces. The secondary balance shaft (23) is driven directly by the primary balance shaft (21). In one example, only one secondary balance shaft (23) may be used, which may leave some forces unbalanced but is more space and cost effective. In another example, two or more secondary balance shafts may be included in a drive chain such that one secondary balance shaft drive the next secondary balance shaft.

## Description

### TECHNICAL FIELD

This disclosure relates in general to a balance system for an engine, or more particularly, to a balance system for a single cylinder engine including a secondary balance shaft driven by a primary balance shaft.

### BACKGROUND

Rotating objects produce inertial forces that if not balanced, produce vibrations. Examples may be seen in unbalanced loads of washing machines or misaligned wheels of a vehicle. An internal combustion engine also includes moving parts that create inertial forces. The inertial forces cause vibrations and audible noise. The internal combustion engine includes one or more pistons that move in a cyclical path through respective cylinders. The speed of the pistons is variable and continually changing through the cyclical path.

Small internal combustion engines may be used in applications such as chainsaws, lawn mowers, wood chippers, stump grinders, concrete trowels, excavators, concrete saws, portable saw mills, weed trimmers, all-terrain vehicles, wood splitters, pressure washers, garden tillers, snow blowers, welding equipment, generators, motorcycles, scooters, and other devices. The movement of the engine produces unbalanced forces, which cause vibrations that especially affect locations in contact with the user such as foot rests, steering wheels, handles and seats of the devices. The vibrations are uncomfortable for the user and may even lead the fatigue, misuse, or accidents.

### BRIEF DESCRIPTION OF THE DRAWINGS

Example implementations are described herein with reference to the following drawings.
FIG. 1 illustrates an example single cylinder engine.
FIG. 2 illustrates an example chart for a single cylinder engine.
FIG. 3 illustrates an example balance systems for the single cylinder engine of FIG. 1.
FIG. 4 illustrates an example system including one secondary balance shaft.
FIG. 5 illustrates an example chart of forces from the system of FIG. 4.
FIG. 6 illustrates an example system including two secondary balance shafts.
FIG. 7 illustrates an example chart of forces from the system of FIG. 6.
FIG. 8 illustrates another example system including two secondary balance shafts.
FIG. 9 illustrates an example flowchart for the engine balance system.
FIG. 10 illustrates an example computing device for controlling or measuring operation of the engine balance system.

### DETAILED DESCRIPTION

The following examples include systems and methods for balancing the forces of rotating crankshafts and reciprocating pistons of single cylinder engines. Single cylinder engines are particularly susceptible to unbalanced forces because there are not multiple pistons to partially balance one another. Various arrangements of balance weights may be used to reduce the unbalanced forces.

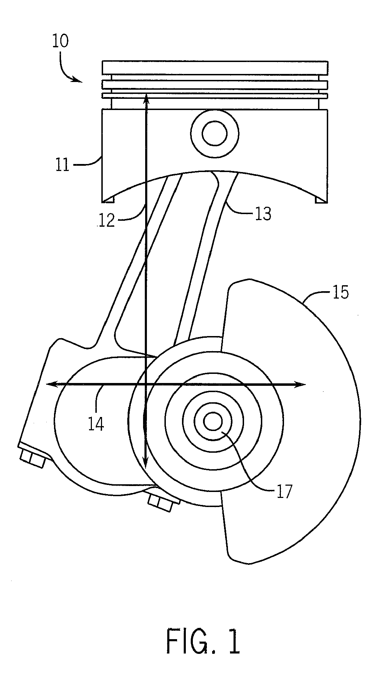

FIG. 1 illustrates an example single cylinder engine 10. The single cylinder engine 10 includes at least a piston 11, a connecting rod 13, and a crankshaft 15 that rotates about a center axis 17. Additional, different, or fewer components may be included.

The single cylinder engine 10 produces forces that may be categorized as reciprocating forces and rotating forces. The piston 11 is bound by the cylinder and thus produces linear motion and reciprocating forces in a linear path. The connecting rod 13 may be modeled as a reciprocating force at one end and a rotating force at the other end.

The piston 11 changes in speed through a cycle that achieves a maximum speed near the center of the cylinder but decelerates and accelerates toward and away from both the top and bottom of the cylinder bore. The inertial forces from the changes in acceleration are applied from the piston 11 to the connecting rod 13 and the crankshaft 15. Any unbalanced forces are then applied to the bearings of the crankshaft 15 and the crankcase of the single cylinder engine 10 and the frame of the machine or device including the engine. These unbalanced forces are felt as vibrations through a handle, steering wheel, or seat in contact with the user.

The movement of the piston 11, connecting rod 13, and crankshaft 15 also produces higher order forces or harmonics. The forces may include an infinite number of harmonics. The most prominent harmonics include primary forces associated with the speed of the crankshaft 15 and secondary forces associated with twice the speed of the crankshaft 15.

When the piston 11 is at top dead center, the primary forces are aligned with the secondary forces, and the forces are additive. Depending on the length of the connecting rod 13 or other dimensions of the single cylinder engine 10, the secondary forces may increase the primary forces by about a predetermined percentage. When the piston 11 is at bottom dead center, the primary forces and the secondary forces, and the forces are subtractive. Depending on the length of the connecting rod 13 or other dimensions of the single cylinder engine 10, the secondary forces may decrease the primary forces by the predetermined percentage. When the length of the connecting rod 13 is twice that of the stroke circumference, the predetermined percentage may be about 25%.

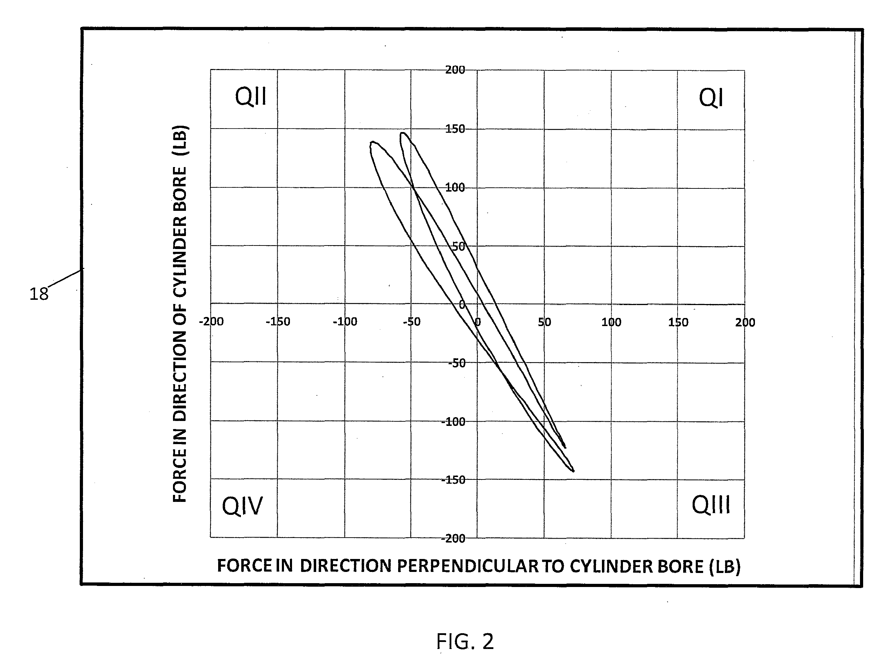

The forces of the single cylinder engine 10 produces may also be categorized by direction. Arrow 12 illustrates forces in the direction of the cylinder bore (e.g., vertical forces). Arrow 14 illustrates forces perpendicular to the direction of the cylinder bore (e.g., horizontal forces). FIG. 2 illustrates an example chart 18 for the unbalanced forces of the single cylinder engine of FIG. 1 including no balance shafts or balance weights. The forces in the direction of the cylinder bore are shown on the vertical axis, and the forces in the direction perpendicular to the cylinder bore are shown in the horizontal axis.

The chart 18 for the unbalanced forces may include four quadrants: positive in the cylinder bore direction and positive in the perpendicular direction (quadrant I), positive in the cylinder bore direction and negative in the perpendicular direction (quadrant II), negative in the cylinder bore direction and positive in the perpendicular direction (quadrant III), and negative in the cylinder bore direction and negative in the perpendicular direction (quadrant IV). The chart 18 for the unbalanced forces illustrates that the magnitude of the forces in quadrant II and quadrant III are greater than that in quadrant I and quadrant IV. The magnitude of the forces in quadrant II and quadrant III are greater than a threshold magnitude. The magnitude of the forces in quadrant I and quadrant IV are less than a threshold magnitude. Thus, the unbalanced forces of single cylinder engine of FIG. 1 may be characterized as extending in two quadrants. These types of forces, extending primarily in one direction and the opposite direction, maximize the effect of the vibrations. The magnitude of the forces may be a function of the model of engine, piston weight, crankshaft weight, and operating speed.

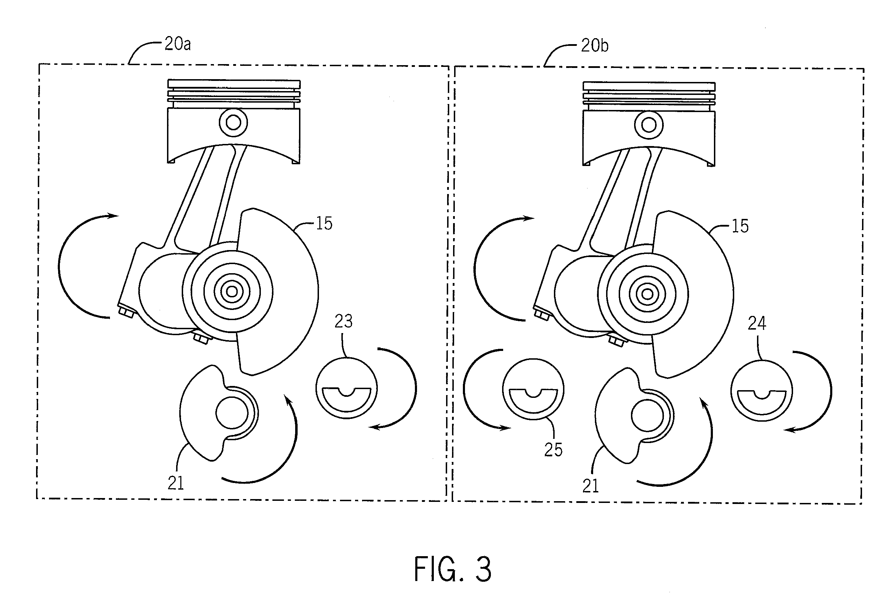

FIG. 3 illustrates an example balance systems for the single cylinder engine of FIG. 1. In one example engine 20a, the balance system includes a single primary balance shaft 21 and a single secondary balance shaft 23. In another example engine 20b, the balance system includes a single primary balance shaft 21, a first secondary balance shaft 24, and a second secondary balance shaft 25, each of which includes balance weights. The crankshaft 15 may also include balance weights. Additional, different, or fewer components may be included.

The crankshaft 15 rotates in a first rotational direction, which is clockwise in the example illustrated FIG. 3. The primary balance shaft 21 rotates in a second rotational direction, which is counterclockwise in the example illustrated in FIG. 3. The single secondary balance shaft 23 may rotate in the first direction or the second direction. In the case of two secondary balance shafts, the first secondary balance shaft 24 may rotate in the first direction, and the second secondary balance shaft 25 may rotate in the second direction, or vice versa.

The primary balance shaft 21 balance forces that occur at the speed of the crankshaft 15 (e.g., first order forces or first harmonic). The primary balance shaft 21 includes an imbalance mass to balance these forces. The secondary balance shafts balance forces that occur at twice the speed of the crankshaft 15 (e.g., second order forces or second harmonic).). The secondary balance shafts include an imbalance mass to balance these forces. The imbalance masses may be the same or different for primary balance shafts or secondary balance shafts. The size of the imbalance masses may be selected as a function of the mass of the piston and the crankshaft. In one example, the size of the imbalance masses for the secondary balance shafts is one half of the mass of the imbalance mass for the primary balance shaft.

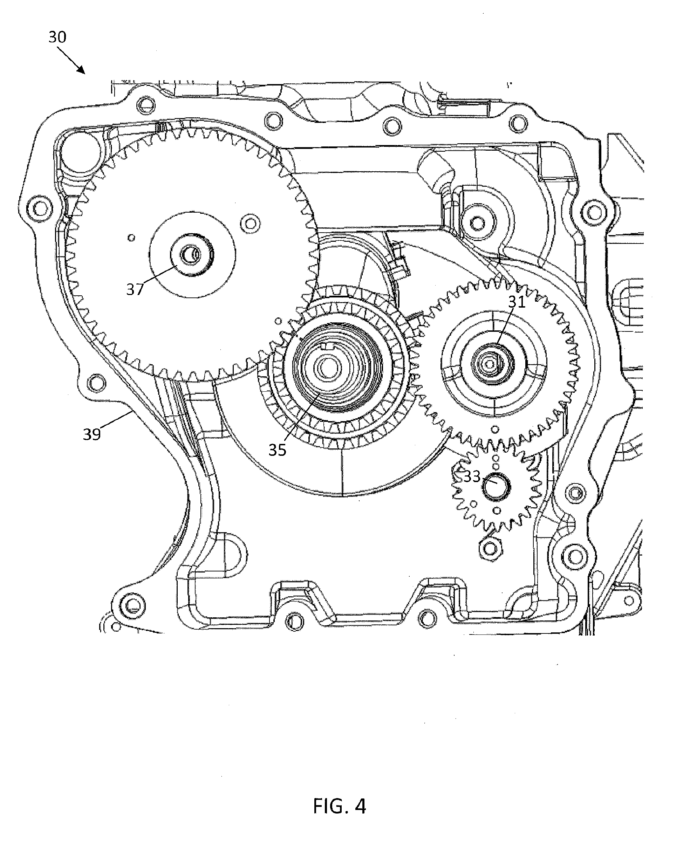

FIG. 4 illustrates an example single cylinder engine 30 including a primary balance shaft 31, a secondary balance shaft 33, a crankshaft 35, a camshaft 37, and an engine casing 39. The single cylinder engine 30 includes exactly one primary balance shaft 31 and exactly one secondary balance shaft 33. Additional, different, or fewer components may be included.

The position of the primary balance shaft 31, which is between the secondary balance shaft 33 and the crankshaft 35, provides an advantage in that it allows are of the balance shafts to be located on the same side of the crankshaft 35.

A first line drawn from the center of the primary balance shaft 31 to the center of the secondary balance shaft 33 may be substantially perpendicular to a second line drawn from the center of the primary balance shaft 31 to the center of the crankshaft 35. The term substantially perpendicular may be 90 degrees plus or minus two degrees. The first line and the second line may meet at another angle range such as 80 to 100 degrees or 70 to 110 degrees. Other arrangements are possible.

In addition, the position of the primary balance shaft 31 allows the secondary balance shaft 33 to be farther apart from the crankshaft 35 without the need for additional drive mechanisms (e.g., idle gears, drive belts, or other devices) to transfer the driving force from the crankshaft 35 to the secondary balance shaft 33.

The crankshaft 35 includes or rotates a crankshaft gear (first gear). The crankshaft gear meshes with a primary shaft gear (second gear) on the primary balance shaft 31. No other balance shaft gear is directly meshed with the crankshaft gear. Thus, fewer parts are needed, less space is used, and lower costs are incurred in manufacturing the engine 30. Use of a single secondary balance shaft spinning at twice the speed of the crankshaft will cause less gear whine and other noise than dual secondary balance shafts.

The balance mass of the crankshaft 35 and the imbalance mass of the primary balance shaft 31 may be equal weights. Together the masses may balance out substantially all of the first harmonic forces. Together the masses may balance the forces of the engine 30 in the fore/aft direction and cancel out each other in the perpendicular direction (e.g., side to side).

The primary shaft gear coupled with the primary balance shaft 31 drives the secondary balance shaft 33. The secondary balance shaft 33 includes a secondary shaft gear (third gear) meshed with the primary shaft gear. The secondary balance shaft 33 includes at least one weight selected to balance forces in a second harmonic caused by operation of the single cylinder engine 30. The second harmonic may include forces at twice the speed of the crankshaft 35. Alternatively, the second harmonic may include forces at twice the speed of the crankshaft 35.

In one example, a circumference of the primary balance shaft is twice a circumference of the secondary balance shaft within a tolerance range and/or a circumference of the third gear is twice a circumference of the third gear. Similar comparisons may be made with the number of teeth of the second and third gears.

In the embodiment of FIG. 4, the single cylinder engine 30 includes no other balance shafts other than the primary balance shaft 31 and the secondary balance shaft 33. The crankshaft gear, primary shaft gear, and secondary shaft gear may be integrally formed with the respective shaft and formed from the same material. Alternatively, the fears may be separate components that are mechanically fixed to the respective shaft.

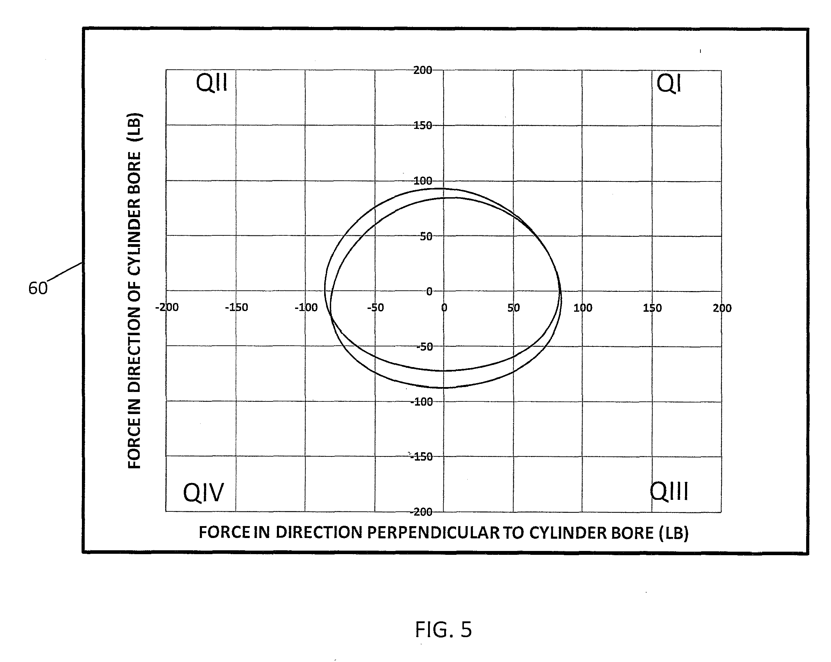

FIG. 5 illustrates an example chart 60 of forces from the system of FIG. 4. Because only one secondary balance shaft 33 is used, significant forces remain. The chart 60 demonstrates forces in excess of significant force threshold in both the direction of the bore and the direction perpendicular to the bore. Examples for the significant force threshold may be 30 pounds, 50 pounds, or 70 pounds, or any value as a function of the weight and speed of the engine 40. A comparison of the chart 18 in FIG. 2 reveals that the partially balanced forces of chart 60 are less in magnitude than the unbalanced forces.

The resultant force on the single cylinder engine 40 after being reduced in magnitude by the primary balance shaft (e.g., first direction or first harmonic) and by the secondary balance shaft (e.g., second direction or second harmonic) is greater than zero and within a predetermined range of the original force on the single cylinder engine in the horizontal direction. Likewise, a resultant force on the single cylinder engine in the second harmonic after being reduced by the single secondary balance shaft 33 is within a predetermined range the original force on the single cylinder engine. The predetermined ranges may be 20% to 80%, 40% to 60% or another range, and may be the same or different.

In addition, the partially balanced forces of chart 60 are approximately equal in multiple directions (e.g., within 50%). In other words, a plot of the forces in the bore direction and perpendicular direction, as shown by chart 60, are illustrated in a circular or elliptical shape.

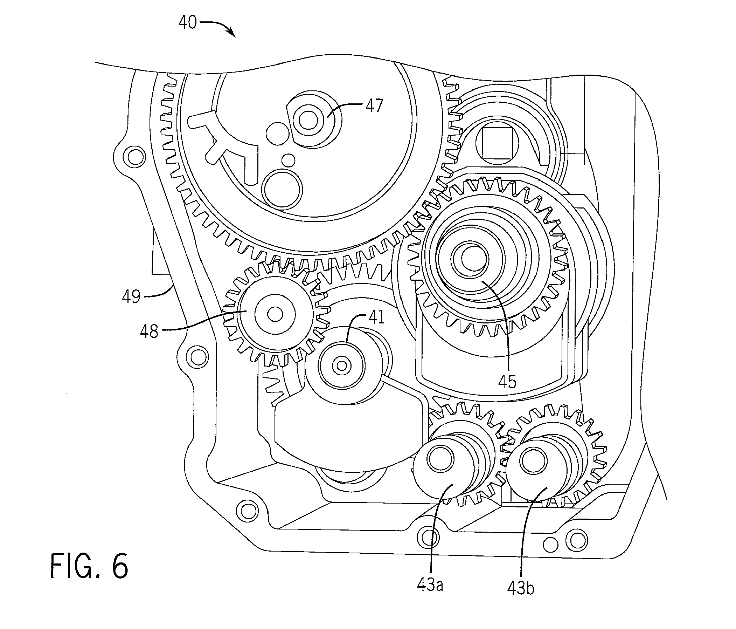

FIG. 6 illustrates an example single cylinder engine 40 including a primary balance shaft 41, a series of secondary balance shafts, a crankshaft 45, a camshaft 47, a governor gear 48 and an engine casing 49. The single cylinder engine 40 may include exactly one primary balance shaft 41 and the series of secondary balance shafts may include a first secondary balance shaft 43a and a second secondary balance shaft 43b. The camshaft 47 rotates to open and close one or more valves to regulate the flow of air and fuel mixture into the engine 40 and the flow of exhaust out of the engine 40. The governor gear 48 control the speed of the engine 40 using one or more flyweights. Additional, different, or fewer components may be included.

The crankshaft 45 includes or rotates a crankshaft gear (first gear). The crankshaft gear meshes with a primary shaft gear (second gear) on the primary balance shaft 41. No other balance shaft gear is directly meshed with the crankshaft gear. The primary shaft gear coupled with the primary balance shaft 41 drives the first secondary balance shaft 43a. The first secondary balance shaft 43a includes a first secondary shaft gear (third gear) meshed with the primary shaft gear. In one alternative the primary balance shaft gear 41 includes two gears: a driven gear meshes with the crankshaft gear, and a drive gear meshes with the first secondary shaft gear.

The first secondary balance shaft 43a includes at least one weight selected to balance some forces in a second harmonic caused by operation of the single cylinder engine 40. The first secondary shaft gear (third gear) is meshed with a secondary shaft gear (fourth gear) coupled to the second secondary balance shaft 43b. The second secondary balance shaft 43b (tertiary balance shaft) includes at least one weight selected to balance some additional forces in a second harmonic caused by operation of the single cylinder engine 30.

The first secondary balance shaft 43a and the second secondary balance shaft 43b are operated in opposite directions at substantially the same speed at approximately twice the speed of the crankshaft 45. The gear (third gear) of the first secondary balance shaft 43a and the gear (fourth gear) of the second secondary balance shaft 43b may have the same number of teeth and/or same circumference. The gears of the first secondary balance shaft 43a and the second secondary balance shaft 43b may be half the circumference, diameter, and/or number of teeth than the gear of the primary balance shaft 41.

The crankshaft gear, primary shaft gear, the first secondary shaft gear and the second secondary shaft gear may be integrally formed with the respective shaft and formed from the same material. Alternatively, the fears may be separate components that are mechanically fixed to the respective shaft.

In the embodiment of FIG. 6, the single cylinder engine 40 includes no other balance shafts other than the primary balance shaft 41, first secondary balance shaft 43a, and the second secondary balance shaft 43b. In one example, additional secondary balance shafts may be included in the series. In another example, additional balance shafts running at higher speeds (e.g., three times the speed of the crankshaft 45, four times the speed of the crankshaft 45, and so on) and/or having drive gears with smaller numbers of teeth to balance out third or harmonics, fourth order harmonics, or higher harmonics.

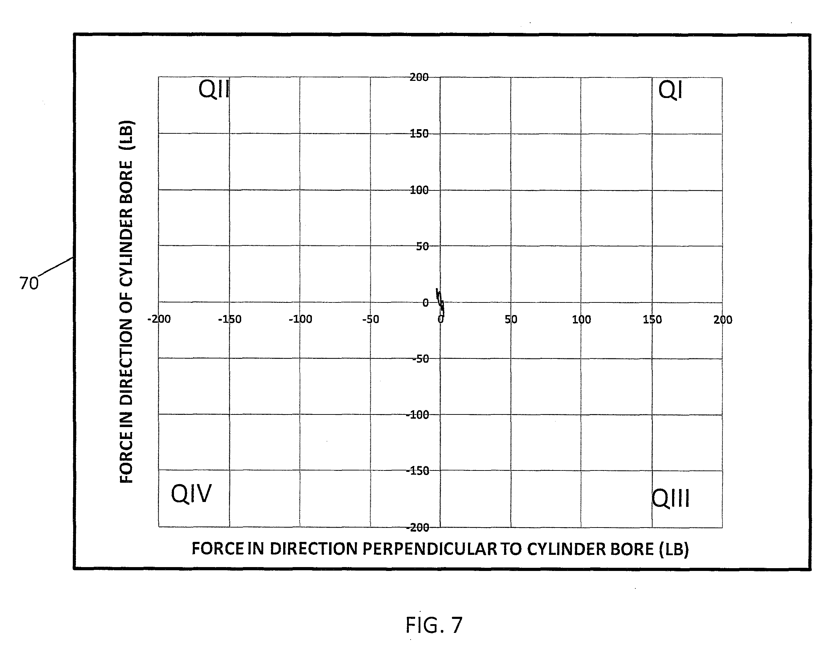

FIG. 7 illustrates an example chart 70 of forces from the system of FIG. 6. The first secondary balance shaft 43a, and the second secondary balance shaft 43b substantially balance out the forces still present when one secondary balance shaft was used as shown by chart 60 of FIG. 5. The resultant forces may be less than a minimal force threshold in bother the cylinder bore direction and the perpendicular direction but still greater than zero. Examples for the minimum force threshold may include 10 pounds of force, 20 pounds of force, or another value.

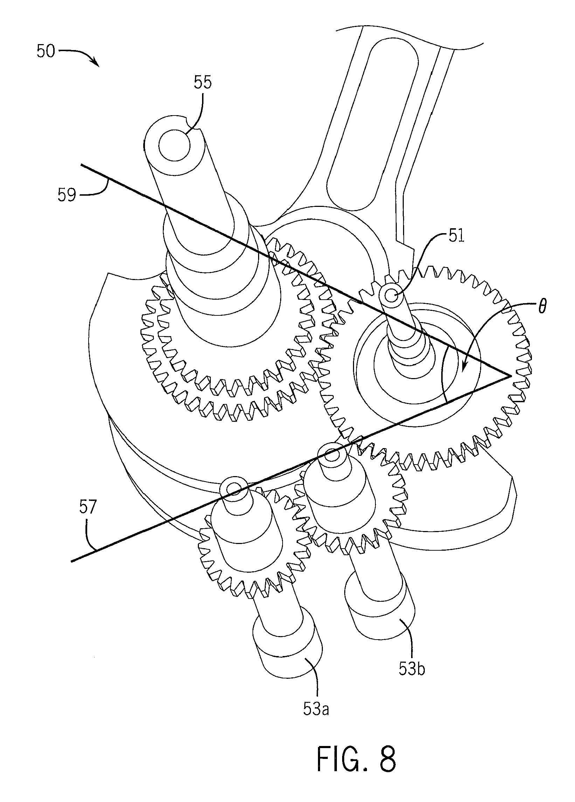

FIG. 8 illustrates another example single cylinder engine 50 including a primary balance shaft 51, a first secondary balance shaft 53a and a second secondary balance shaft 53b, and a crankshaft 55. The gearing, speed, and balance masses may be similar to that described in association with FIG. 6. Additional, different, or fewer components may be included.

A first line 57 connects the first secondary balance shaft 53a and a second secondary balance shaft 53b (e.g., at the centers of the shafts). A second line 59 connects the crankshaft 55 and the primary balance shaft 51 (e.g., at the centers of the shafts). The components of the engine 50 are arranged according to the angle theta (θ) between the first line 57 and the second line 59. The angle theta may be within a predetermined range. For example, theta may be an acute angle less than 90 degrees. In another example, theta may be between 20 degrees and 70 degrees, 30 degrees and 60 degrees, or another range.

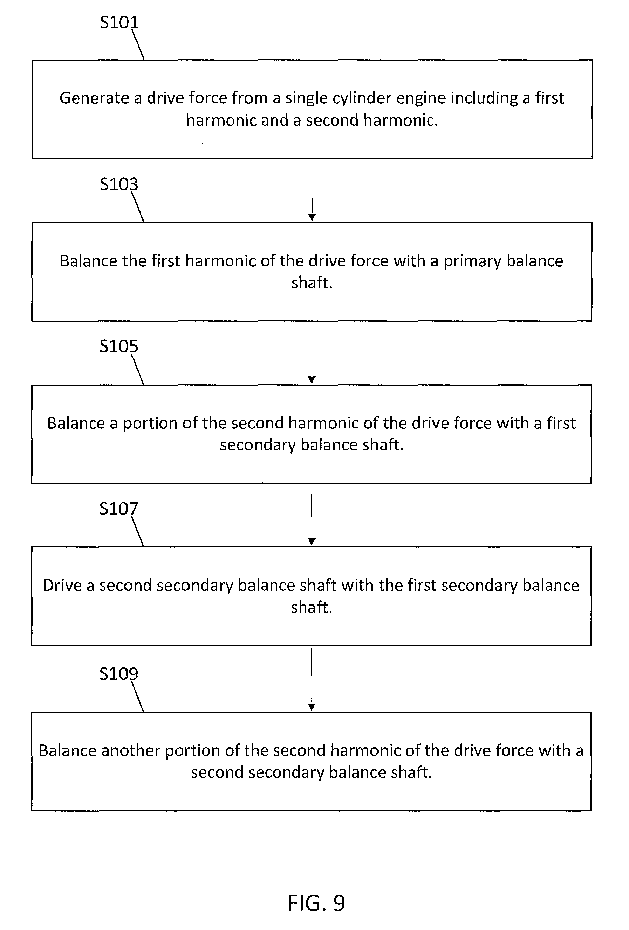

FIG. 9 illustrates an example flowchart for the balance systems of FIGS. 4, 6, and 8. Additional, different, or fewer acts may be provided. The acts may be performed in the order shown or other orders. The acts may also be repeated.

At act S101, a drive force is generated from the operation of a single cylinder engine including at least a first harmonic and a second harmonic. Additional harmonics may be included and logarithmically decrease in magnitude. The drive force may be a function of the rotational speed of the engine, the size of the engine, and the individual component masses of the engine.

At act S103, the first harmonic of the drive force is at least partially balanced with a primary balance shaft including at least one weight selected to balance forces in a first direction caused by operation of the single cylinder engine. The first harmonic of the drive force may also be partially balanced by at least one weight of the crankshaft. The primary balance shaft is directly meshed with a crankshaft of the single cylinder engine and no other balance shaft gears are meshed with the crankshaft of the single cylinder engine.

At act S105, a second harmonic of the drive force is at least partially balanced with a secondary balance shaft including at least one weight selected to balance forces in a second direction caused by operation of the single cylinder engine. The secondary balance shaft is directly meshed with the primary balance shaft.

At act S107, which is optional, a second secondary balance shaft is meshed with and/or driven by the first secondary balance shaft. At act S109, another portion of the second harmonic of the drive force is balance with the second secondary balance shaft including at least one weight selected to further balance forces in the second direction caused by operation of the single cylinder engine. Acts S107 and S109 are optional.

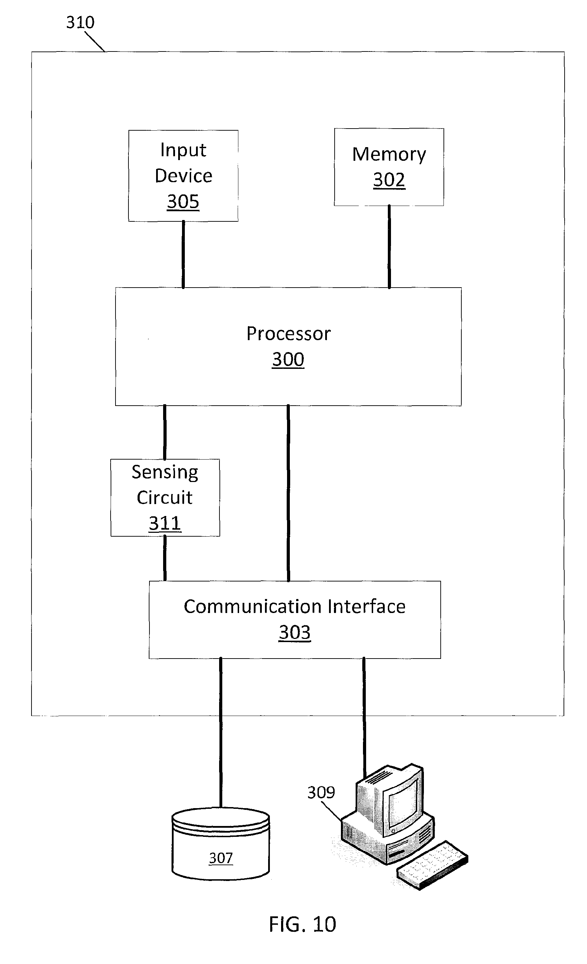

FIG. 10 illustrates an example controller 310 to monitor the balance system of the single cylinder engines described above. The controller 310 may include a processor 300, a memory 302, and a communication interface 303. The generator controller 10 may be connected to a workstation 309 or another external device (e.g., control panel) and/or a database 307. The controller 310 may receive data from an input device 305 and/or a sensing circuit 311. The sensing circuit 311 receives sensor measurements from sensors for measuring the resultant forces or vibrations of the single cylinder engine. Additional, different, or fewer components may be included.

The sensing circuit 311 may include accelerometers, vibration sensors, or another sensor for determining the resultant forces in the direction of the cylinder bore or the direction perpendicular to the cylinder bore. The sensors may be mounted on the device including the single cylinder engine. For example, the sensors may be mounted on a lawn mower at the left footrest, the right footrest, the seat, the steering wheel, and/or directly on the engine.

The processor 300 may analyze the sensor data to determine how well forces are being balanced. For example, the processor 300 may compare the sensor data to threshold data to determine how well the balance systems function with different models of engine.

In one example, the processor 300 may compare the sensor data to a safety threshold to determine when the forces may cause excessive vibrations that lead to fatigue or mis-operation of the device including the engine. In response, the processor 300 may generate a kill signal that shuts off the engine.

In another example, the processor 300 may compare the sensor data to threshold values to activate a transmission mechanism that brings a second secondary balance shaft in and out of gear with a first secondary balance shaft. In other words, the processor 300 may activate the transmission mechanism from a first position in which only one secondary balance shaft rotates (e.g., FIG. 4) to a second position in which two secondary balance shafts rotate (e.g., FIG. 6).

In another example, the processor 300 may compile, organize, or analyze the sensor data in a format stored in memory 302. The processor 300 may perform a statistical analysis on the data. The processor 300 may determine a performance of the balance system based on the analysis of the data. The processor may generate messages including the performance and transmit the message using the communication interface 303 to the workstation 309 or a user's mobile device.

The processor 300 may include a general processor, digital signal processor, an application specific integrated circuit (ASIC), field programmable gate array (FPGA), analog circuit, digital circuit, combinations thereof, or other now known or later developed processor. The processor 300 may be a single device or combinations of devices, such as associated with a network, distributed processing, or cloud computing.

The memory 302 may be a volatile memory or a non-volatile memory. The memory 302 may include one or more of a read only memory (ROM), random access memory (RAM), a flash memory, an electronic erasable program read only memory (EEPROM), or other type of memory. The memory 302 may be removable from the network device, such as a secure digital (SD) memory card.

The input device 305 may be used to enter threshold values, tolerances, and predetermined ranges described above. The input device 305 may be one or more buttons, keypad, keyboard, mouse, touch pad, voice recognition circuit, or other device or component for inputting data to the controller 100. The input device 203 and a display may be combined as a touch screen. The input device 305 may be an interface connected to a mobile device such as a smart phone, computer, or tablet for sending user settings to the controller 310.

In addition to ingress ports and egress ports, the communication interface 303 may include any operable connection. An operable connection may be one in which signals, physical communications, and/or logical communications may be sent and/or received. An operable connection may include a physical interface, an electrical interface, and/or a data interface.

The communication interface 303 may be connected to a network. The network may include wired networks (e.g., Ethernet), wireless networks, or combinations thereof. The wireless network may be a cellular telephone network, an 802.11, 802.16, 802.20, or WiMax network. Further, the network may be a public network, such as the Internet, a private network, such as an intranet, or combinations thereof, and may utilize a variety of networking protocols now available or later developed including, but not limited to TCP/IP based networking protocols.

While the computer-readable medium (e.g., memory 302 or database 307) is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magnetooptical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored. The computer-readable medium may be non-transitory, which includes all tangible computer-readable media.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

As used in this application, the term 'circuitry' or 'circuit' refers to all of the following: (a)hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

Processors suitable for the execution of a computer program include, by way of example, both general and special purpose microprocessors, and anyone or more processors of any kind of digital computer. Generally, a processor may receive instructions and data from a read only memory or a random access memory or both. The essential elements of a computer are a processor for performing instructions and one or more memory devices for storing instructions and data. Generally, a computer may also include, or be operatively coupled to receive data from or transfer data to, or both, one or more mass storage devices for storing data, e.g., magnetic, magneto optical disks, or optical disks. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

The present invention can further be described by means of the following clauses:
1. An apparatus comprising:
   a crankshaft for a single cylinder engine;
   a first gear rotated by the crankshaft;
   a primary balance shaft including at least one weight selected to balance forces in a first harmonic caused by operation of the single cylinder engine;
   a second gear for the primary balance shaft, wherein the second gear is directly meshed with the first gear and no other balance shaft gear is directly meshed with the first gear;
   a secondary balance shaft including at least one weight selected to balance forces of a second harmonic caused by operation of the single cylinder engine;
   a third gear for the secondary balance shaft, wherein the third gear is directly meshed with the second gear.
2. The apparatus of clause 1, wherein the single cylinder engine includes no other balance shafts other than the primary balance shaft and the secondary balance shaft.
3. The apparatus of clause 1, further comprising:
   a tertiary balance shaft including at least one weight selected to balance forces in the second harmonic caused by operation of the single cylinder engine; and
   a fourth gear rotated by the tertiary balance shaft, wherein the fourth gear is directly meshed with the third gear.
4. The apparatus of clause 3, wherein the single cylinder engine includes no other balance shafts other than the primary balance shaft, the secondary balance shaft, and the tertiary balance shaft.
5. The apparatus of clause 3, where in a first line connects centers of the crankshaft and the primary balance shaft and a second line connects centers of the secondary balance shaft and the tertiary balance shaft, and wherein an angle of intersection between the first line and the second line is between 20 degrees and 70 degrees.
6. The apparatus of clause 1, wherein a speed of the secondary balance shaft is twice a speed of the primary balance shaft within a tolerance range.
7. The apparatus of claim 1, wherein a circumference of the primary balance shaft is twice a circumference of the secondary balance shaft within a tolerance range.
8. The apparatus of clause 1, wherein a resultant force on the single cylinder engine after being reduced in the first harmonic by the primary balance shaft and in the second harmonic by the secondary balance shaft is greater than zero.
9. The apparatus of clause 1, wherein a resultant force on the single cylinder engine in a horizontal direction after being reduced by the primary balance shaft and the secondary balance shaft is 20% to 80% of the original force on the single cylinder engine in the horizontal direction.
10. The apparatus of clause 1, wherein a resultant force on the single cylinder engine in the second harmonic after being reduced by the secondary balance shaft is 20% to 80% of the original force on the single cylinder engine.
11. The apparatus of clause 1, wherein a resultant force on the single cylinder engine is equally distributed in the first direction and the second direction within a tolerance range.
12. The apparatus of clause 1, further comprising:
   a sensor configured to measure a resultant force on the single cylinder engine after being distributed by the primary balance shaft and the secondary balance shaft.
13. An engine comprising:
   a piston configured to apply a drive force to a connecting rod;
   a crankshaft configured to rotate under the drive force from the connecting rod;
   a first gear rotated by the crankshaft;
   a primary balance shaft including at least one weight selected to balance forces in a first direction caused by operation of the piston;
   a second gear of the primary balance shaft, wherein the second gear is directly meshed with the first gear and the only balance shaft gear directly meshed with the first gear;
   a secondary balance shaft including at least one weight selected to balance forces in a second direction at a multiple speed of the balance forces in the first direction caused by operation of the single cylinder engine; and
   a third gear of to the secondary balance shaft, wherein the third gear is directly driven by the primary balance shaft.
14. The engine of clause 13, wherein the single cylinder engine includes no other balance shafts other than the primary balance shaft and the secondary balance shaft.
15. The engine of clause 13, further comprising:
   a tertiary balance shaft including at least one weight selected to balance forces in the second direction at the multiple speed of the balance forces in the first direction caused by operation of the single cylinder engine, wherein the tertiary balance shaft balances at least in part, forces generated by the secondary balance shaft; and
   a fourth gear rotated by the tertiary balance shaft, wherein the fourth gear is directly meshed with the third gear.
16. The engine of clause 13, wherein the single cylinder engine includes no other balance weights other than the primary balance shaft, the secondary balance shaft, and the tertiary balance shaft.
17. The engine of clause 13, wherein a resultant force on the single cylinder engine after being reduced in the first direction by the primary balance shaft and in the second direction by the secondary balance shaft is greater than zero.
18. A method comprising:
   generating a drive force from a single cylinder engine including a first harmonic and a second harmonic;
   balancing the first harmonic of the drive force with a primary balance shaft including at least one weight selected to balance forces in a first direction caused by operation of the single cylinder engine; and
   balancing a portion of the second harmonic of the drive force with a secondary balance shaft including at least one weight selected to balance forces in a second direction caused by operation of the single cylinder engine,
   wherein the primary balance shaft is directly meshed with a crankshaft of the single cylinder engine and no other balance shaft gears are meshed with the crankshaft of the single cylinder engine,
   wherein the secondary balance shaft is directly meshed with the primary balance shaft.
19. The method of clause 18, further comprising:
   balancing another portion of the second harmonic of the drive force with a tertiary balance shaft including at least one weight selected to further balance forces in the second direction caused by operation of the single cylinder engine,
   wherein the tertiary balance shaft is directly meshed with the secondary balance shaft.
20. The method of clause 18, wherein the single cylinder engine includes no other balance weights other than the primary balance shaft, the secondary balance shaft, and the tertiary balance shaft.

## Claims

1. An apparatus comprising:
a crankshaft for a single cylinder engine;
a first gear rotated by the crankshaft;
a primary balance shaft including at least one weight selected to balance forces in a first harmonic caused by operation of the single cylinder engine;
a second gear for the primary balance shaft, wherein the second gear is directly meshed with the first gear and no other balance shaft gear is directly meshed with the first gear;
a secondary balance shaft including at least one weight selected to balance forces of a second harmonic caused by operation of the single cylinder engine;
a third gear for the secondary balance shaft, wherein the third gear is directly meshed with the second gear.

2. The apparatus of claim 1, wherein the single cylinder engine includes no other balance shafts other than the primary balance shaft and the secondary balance shaft.

3. The apparatus of claim 1, further comprising:
a tertiary balance shaft including at least one weight selected to balance forces in the second harmonic caused by operation of the single cylinder engine; and
a fourth gear rotated by the tertiary balance shaft, wherein the fourth gear is directly meshed with the third gear.

4. The apparatus of claim 3, wherein the single cylinder engine includes no other balance shafts other than the primary balance shaft, the secondary balance shaft, and the tertiary balance shaft.

5. The apparatus of claim 3, where in a first line connects centers of the crankshaft and the primary balance shaft and a second line connects centers of the secondary balance shaft and the tertiary balance shaft, and wherein an angle of intersection between the first line and the second line is between 20 degrees and 70 degrees.

6. The apparatus of claim 1, wherein a speed of the secondary balance shaft is twice a speed of the primary balance shaft within a tolerance range.

7. The apparatus of claim 1, wherein a circumference of the primary balance shaft is twice a circumference of the secondary balance shaft within a tolerance range.

8. The apparatus of claim 1, wherein a resultant force on the single cylinder engine after being reduced in the first harmonic by the primary balance shaft and in the second harmonic by the secondary balance shaft is greater than zero.

9. The apparatus of claim 1, wherein a resultant force on the single cylinder engine in a horizontal direction after being reduced by the primary balance shaft and the secondary balance shaft is 20% to 80% of the original force on the single cylinder engine in the horizontal direction.

10. The apparatus of claim 1, wherein a resultant force on the single cylinder engine in the second harmonic after being reduced by the secondary balance shaft is 20% to 80% of the original force on the single cylinder engine.

11. The apparatus of claim 1, wherein a resultant force on the single cylinder engine is equally distributed in the first direction and the second direction within a tolerance range.

12. The apparatus of claim 1, further comprising:
a sensor configured to measure a resultant force on the single cylinder engine after being distributed by the primary balance shaft and the secondary balance shaft.

13. A method comprising:
generating a drive force from a single cylinder engine including a first harmonic and a second harmonic;
balancing the first harmonic of the drive force with a primary balance shaft including at least one weight selected to balance forces in a first direction caused by operation of the single cylinder engine; and
balancing a portion of the second harmonic of the drive force with a secondary balance shaft including at least one weight selected to balance forces in a second direction caused by operation of the single cylinder engine,
wherein the primary balance shaft is directly meshed with a crankshaft of the single cylinder engine and no other balance shaft gears are meshed with the crankshaft of the single cylinder engine,
wherein the secondary balance shaft is directly meshed with the primary balance shaft.

14. The method of claim 13, further comprising:
balancing another portion of the second harmonic of the drive force with a tertiary balance shaft including at least one weight selected to further balance forces in the second direction caused by operation of the single cylinder engine,
wherein the tertiary balance shaft is directly meshed with the secondary balance shaft.

15. The method of claim 13, wherein the single cylinder engine includes no other balance weights other than the primary balance shaft, the secondary balance shaft, and the tertiary balance shaft.
